# DEMANDE DE BREVET EUROPEEN

(11) **EP 1 466 781 A1**
(43) Date de publication de la demande: **13.10.2004**
(21) Numéro de dépôt: 04364023.4
(22) Date de dépôt: 25.03.2004
(51) Int. Cl.: B60P 3/36

(54) **Système d'alimentation en énergie d'équipements domestiques de l'habitacle d'une autocaravane et autocaravane équipée d'un tel système**

(30) Priorité: 27.03.2003 FR 0303797
(71) Demandeur: Bolloré Motorhome, 22450 Mantallot (FR)
(72) Inventeur: Bolloré, Patrick, 22450 Langoat (FR)
(74) Mandataire: Larcher, Dominique

(57) **Abrégé**

L'invention concerne un système d'alimentation en énergie d'équipements domestiques de l'habitacle d'une autocaravane, les équipements incluant une chaudière (1a) et des moyens de cuisson (1b,1c) caractérisé en ce qu'il comprend des premiers moyens d'alimentation (2) et des seconds moyens d'alimentation (3) en énergie d'au moins une partie desdits équipement y inclus ladite chaudière (1a) et lesdits moyens de cuisson (1b,1c) et des moyens de gestion (3a) des seconds moyens d'alimentation, les premiers moyens d'alimentation (2) utilisant comme source d'énergie du gasoil, ou carburant liquide équivalent, de la même nature que celui utilisé pour la propulsion de ladite autocaravane selon le cycle diesel et, les seconds moyens d'alimentation (3) utilisant l'électricité comme source d'énergie, ladite électricité étant stockée dans au moins une batterie (4,4a) embarquée sur l'autocaravane et produite par l'alternateur (5) de celle-ci et par des moyens annexes de production d'électricité (6a, 6b) respectivement panneau(x) solaire(s) photovoltaïque (s) et éolienne(s) également embarqués sur l'autocaravane, le système incluant de plus des moyens de connexion (7) au secteur permettant de recharger la batterie et/ou d'alimenter directement au moins certains desdits équipements.

## Description

L'invention concerne le domaine de la conception et de la réalisation des autocaravanes (également désignées par l'anglicisme « camping-car »).

Plus précisément, l'invention se rapporte à un système d'alimentation en énergie des équipements domestiques des habitacles de ces autocaravanes et principalement à la chaudière, qui permet de produire de l'eau chaude stockée dans un ballon et de chauffer l'habitacle, et aux moyens de cuisson (plaques de cuisson et/ou four ou moyens combinés).équipant celles-ci.

Selon les autocaravanes, ces équipements domestiques peuvent comprendre outre une telle chaudière et de tels moyens de cuisson, un réfrigérateur, une pompe à eau pompant de l'eau propre dans un réservoir d'eau propre et l'acheminant vers un robinet, un autre robinet pouvant être connecté au ballon d'eau chaude.

Ces équipements domestiques peuvent être, selon un art antérieur, reliés à des moyens d'alimentation en énergie électrique. Cette énergie électrique provient de batteries de stockage. La chaudière peut quant à elle être reliée à un réservoir de carburant qui le plus souvent est du fuel.

L'inconvénient de ce type de système d'alimentation d'énergie d'équipements domestiques d'autocaravanes réside dans le fait que l'autonomie qu'il permet est faible et ceci même lorsqu'on utilise plusieurs batteries de stockage.

Selon un autre type d'art antérieur, le chauffage de l'habitacle et la production d'eau chaude sanitaire ainsi que la cuisson des aliments sont effectués respectivement grâce à une chaudière et des moyens de cuisson utilisant comme source d'énergie du gaz stocké en bouteille. Toutefois, dans certains endroits ou certaines circonstances, l'utilisation de gaz est interdite ou impossible. C'est notamment le cas lorsque le véhicule est en circulation. Dans ce cas, on peut prévoir des moyens auxiliaires d'alimentation en énergie électrique 12 volts de tout ou partie de ces équipements, l'électricité étant fournie par l'alternateur du véhicule ou étant fournie par le secteur, en utilisant éventuellement un transformateur redresseur régulateur permettant de transformer le courant 220 volts en courant 12 volts.

Les gaz les plus couramment utilisés sont le propane ou le butane stockés dans des bouteilles. On peut aussi utiliser le gaz de pétrole liquéfié (GPL) également stocké en bouteille ou pouvant être prévu dans un réservoir fixé au véhicule. Le principale problème suscité par l'utilisation de ce type de gaz (butane, propane, GPL) résulte du fait que les récipients qui les contiennent ne sont pas toujours munis de soupape de sécurité. Ces récipients remplis de gaz peuvent alors constituer de véritables bombes potentielles en cas d'incendie ou d'accident du véhicule.

Un autre inconvénient suscité par l'utilisation de telles bouteilles de gaz résulte dans le fait que leur manutention, notamment lors de leur remplacement, est fastidieux.

Par ailleurs, le prix des recharges est relativement élevé et l'encombrement de ces bouteilles dans le véhicule est important, ce qui constitue deux autres inconvénients notoires.

Enfin, on notera aussi que les recharges de gaz varient souvent selon les pays et qu'il est parfois difficile, lors de déplacement à l'étranger, de trouver les recharges idoines.

En ce qui concerne le GPL, les raccords de remplissage à l'étranger correspondent de plus rarement avec ceux utilisés dans le pays d'origine du véhicule.

L'objectif de la présente invention est de proposer un système d'alimentation en énergie d'équipements domestiques de l'habitacle des autocaravanes, ne présentant pas les inconvénients sus-cités de l'état de la technique.

Notamment, un objectif de la présente invention est de décrire un tel système qui autorise une autonomie de fonctionnement de ces équipements domestiques beaucoup plus importante que dans l'état de la technique.

Encore un autre objectif de la présente invention est de divulguer un tel système qui implique des conditions d'utilisation améliorées par rapport aux systèmes existants.

Encore un autre objectif de la présente invention est de divulguer un tel système qui présente des conditions d'utilisation beaucoup plus sûres que les systèmes impliquant l'utilisation de bouteilles ou cartouches de gaz.

Ces différents objectifs, ainsi que d'autres qui apparaîtront par la suite sont atteint grâce à l'invention qui concerne un Système d'alimentation en énergie d'équipements domestiques de l'habitacle d'une autocaravane, lesdits équipements incluant une chaudière et des moyens de cuisson caractérisé en ce qu'il comprend:
- des premiers moyens d'alimentation en énergie d'au moins une partie desdits équipement y inclus ladite chaudière et lesdits moyens de cuisson ;
- des seconds moyens d'alimentation en énergie d'au moins une partie desdits équipements, y inclus ladite chaudière et lesdits moyens de cuisson , et,
- des moyens de gestion desdits seconds moyens d'alimentation,
lesdits premiers moyens d'alimentation utilisant comme source d'énergie un carburant liquide de la même nature que celui utilisé pour la propulsion de ladite autocaravane selon le cycle de "Diesel" et,
lesdits seconds moyens d'alimentation utilisant l'électricité comme source d'énergie, ladite électricité étant stockée dans au moins une batterie embarquée sur ladite autocaravane et produite par l'alternateur de ladite autocaravane et par des moyens annexes de production d'électricité également embarqués sur ladite autocaravane,
le système incluant de plus des moyens de connexion au secteur permettant de recharger ladite batterie et/ou d'alimenter directement au moins certains desdits équipements.

Ainsi la présente invention consiste à faire fonctionner à la fois la chaudière et les moyens de cuisson de l'autocaravane :
- avec du carburant liquide de même nature que celui utilisé pour la propulstion du véhicule : gasoil ou tout autre carburant liquide équivalent : pétrole lampant, carburant à base de colza, Aquazole, ou autre carburant susceptible de fonctionner selon un cycle diesel d'une part, et ;
- avec de l'énergie électrique provenant non seulement de l'alternateur du véhicule mais aussi de moyens de production d'électricité annexes qui pourront être de natures variées et dont des exemples seront donnés ci-après.

Le système prévoit également la possibilité de connexion au secteur (220V) soit pour recharger la ou les batteries du système par l'intermédiaire d'un dispositif transformateur connu en soi, soit pour alimenter directement tout ou partie des équipements domestiques en question.

Selon une variante, lesdits moyens annexes de production d'électricité incluent au moins un panneau solaire photovoltaïque.

Egalement selon une variante, lesdits moyens annexes de production d'électricité incluent au moins une éolienne.

Bien évidemment, il pourra être envisagé d'utiliser à la fois un ou plusieurs panneaux solaires photovoltaïque et une ou plusieurs éoliennes à titre de moyens annexes de production d'énergie électrique. Ce type de moyen de production d'énergie électrique présente l'avantage d'être écologique et de pouvoir être mis en oeuvre tant lorsque le véhicule est à l'arrêt que lorsqu'il est en déplacement. En ce qui concerne l'éolienne, on notera que ce dispositif peut être potentialisé lors du déplacement du véhicule.

Préférentiellement ladite au moins une batterie embarquée inclut la batterie de ladite autocaravane et au moins une batterie auxiliaire.

La ou les batteries auxiliaires pourront servir au stockage de l'électricité et venir suppléer la batterie propre à l'autocaravane stockant l'énergie électrique produite par l'alternateur du groupe motopropulseur de celle-ci, et ainsi augmenter encore le degré d'autonomie du système. Ces batteries auxiliaires pourront avantageusement être rechargées soit à partir des moyens de production d'électricité annexes, soit à partir du secteur.

Lesdits moyens de gestion des moyens d'alimentation en électricité collectent l'énergie en provenance de l'alternateur du groupe moto propulseur de l'autocaravane et de sa batterie, des batteries auxilliaires et des moyens annexes (panneaux solaires - éoliennes ). Ces moyens de gestion peuvent être à commande manuelle ou automatisée. Dans un mode de fonctionnement automatique on pourra retenir pour ce faire l'utilisation soit d'un réseau basse tension par fils mono conducteurs d'information électriques, soit une alimentation électrique (paramètres de fonctionnement, consignes, codes défauts, alarmes) selon un réseau multiplexé.

La chaudière utilisée pourra être une chaudière produisant de la chaleur via un fluide caloporteur (le circuit de la chaudière pourra le cas échéant être relié au circuit de refroidissement du groupe motopropulseur de l'autocaravane) ou encore une chaudière produisant de l'air chaud pulsé direct.

Le gasoil est la source principale d'énergie de la chaudière tandis que l'électricité est destinée à assurer certaines fonctions internes à celle-ci : activation et désactivation du ventilateur interne, régulation de la combustion, pompage du carburant, électrovanne, pompe de circulation du fluide caloporteur, moteur de soufflerie vers l'extérieur des calories ...

Comme déjà indiqué les moyens de cuisson pourront inclure une ou plusieurs plaques de cuisson et/ou un four ou un élément combiné four-plaque(s) de cuisson.

La source d'énergie principale des moyens de cuisson est constituée par le gasoil. L'électricité est destinée à permettre la mise en oeuvre de certaines fonctions internes de ces moyens (ventilation interne du four, cartes électroniques de gestion, régulation des températures de cuisson, pompage du carburant, électrovannes, préchauffage d'amorçage de combustion ...).

La gestion du fonctionnement de telles chaudières et de telles plaques de cuisson (autorisation de fonctionnement, régulation de température, mode de sécurité, adaptation du fonctionnement aux paramètres extérieurs...) peut être opérée manuellement ou automatiquement par lesdits moyens de gestion des moyens d'alimentation électrique.

Le gasoil (ou liquide équivalent) pourra préférentiellement être prélevé directement dans le réservoir de l'auto-caravane mais aussi dans un réservoir annexe, éventuellement l'intermédiaire ou pas d'une pompe d'alimentation externe.

Comme indiqué ci-dessus, l'autocaravane pourra aussi être équipé d'un réfrigérateur. Deux types de réfrigérateurs peuvent être envisagés.

Un premier modèle peut être un réfrigérateur à compression utilisant uniquement l'électricité comme source d'énergie principale et comme source d'alimentation pour sa gestion, régulation thermique et entraînement du groupe de compression. Ce type de réfrigérateur peut par ailleurs être alimenté directement par le secteur.

La gestion du fonctionnement du réfrigérateur (échange des informations de température interne et d'interdiction ou d'autorisation de fonctionnement du groupe de compression, notamment en phase nocturne,...) peut être opérée manuellement ou automatiquement par lesdits moyens de gestion des moyens d'alimentation électrique. A l'aide soit du réseau basse tension soit du réseau multiplexé mentionné ci-dessus..

Un second modèle de réfrigérateur peut être un de type absorption dont la source d'énergie principale est du gasoil et pour lequel l'électricité est utilisé pour la régulation de combustion du carburant tout comme les plaques de cuisson diesel, régulation qui peut également être gérée par lesdits moyens de gestion des moyens d'alimentation électrique.

Comme déjà précisé l'autocaravane pourra aussi être équipé d'un ballon d'eau chaude sanitaire pouvant fonctionner sur secteur et/ou grâce aux moyens d'alimentation électriques selon l'invention

La production d'eau chaude sanitaire pourra aussi être obtenue par un échangeur liquide caloporteur/eau sanitaire, du type à plaque ou à serpentin.

L'autocaravane pourra aussi être équipée d'un échangeur air chaud pulsé - eau propre sanitaire, variante du ballon d'eau propre sanitaire lorsque l'origine de la chaleur est l'air pulsé direct en provenance de la chaudière diesel. Ledit échangeur peut avoir ou pas un effet d'accumulation d'eau chaude sanitaire. L'échauffement de l'eau propre sanitaire peut aussi être obtenu par effet joule d'une résistance immergée en utilisant soit les moyens d'alimentation électrique selon l'invention, soit l'alimentation secteur.

L'autocaravane pourra aussi être équipée d'un aérotherme de chauffage de l'habitacle. Le but d'un tel aérotherme est de diffuser la chaleur transportée par le liquide colporteur calorique vers la partie habitable de l'autocaravane. Pour cela ledit aérotherme est composé d'un échangeur thermique liquide/air et d'une soufflerie de ventilation alimentée soit par le système de gestion électrique soit manuellement.

L'autocaravane pourra aussi être équipée d'un radiateur à convection naturelle, en variante à l'aérotherme lorsque celui-ci ne nécessite pas l'utilisation d'un moto - ventilateur.

Le système selon l'invention pourra inclure une pompe à carburant pour permettre l'approvisionnement en gasoil des équipements en consommant et n'étant pas pourvu d'une telle pompe. Ladite pompe sera alors alimentée électriquement soit via les moyens de gestion électrique , soit manuellement.

L'invention couvre également toute autocaravane avec habitacle à l'intérieur duquel sont installés des équipements domestiques, caractérisée en ce qu'elle est pourvue d'un système d'alimentation en énergie d'au moins une partie desdits équipements tel que décrit ci-dessus.

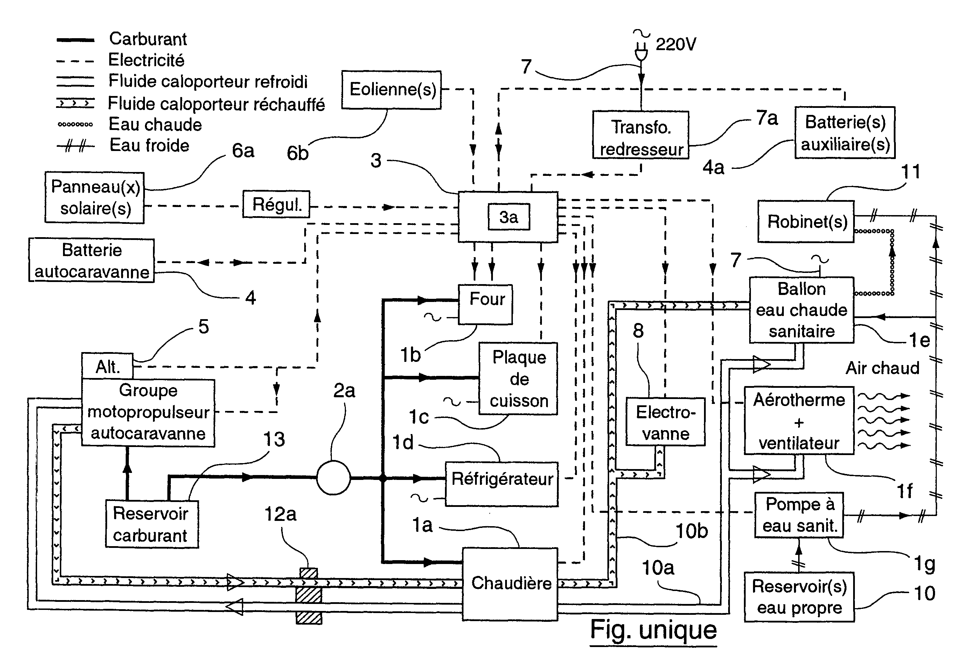

L'invention, ainsi que les différents avantages qu'elle présente, seront plus facilement compris grâce à la description qui va suivre d'un mode de réalisation non limitatif de celle-ci donné en référence à la figure unique qui représente un schéma de principe de ce mode de réalisation.

En référence à cette figure unique, le système selon l'invention est destiné à alimenter en énergie différents équipements domestiques de l'habitacle d'une autocaravane à savoir, dans le cas d'espèce, une chaudière 1a, un four 1b, une plaque de cuisson 1c, un réfrigérateur 1d, un ballon d'eau chaude destiné à la production d'eau chaude sanitaire 1e, un aérotherme pourvu d'un ventilateur 1f, une pompe à eau sanitaire 1g.

La chaudière 1a est pourvue d'un système échangeur de chaleur transportant un fluide caloporteur et permet le chauffage du ballon d'eau chaude 1e et le chauffage de l'aérotherme 1f. La pompe à eau 1g permet de prélever de l'eau propre dans un réservoir 10 pour l'acheminer vers un jeu de robinet 11 qui distribue par ailleurs de l'eau chaude provenant du ballon 1e, les eaux usées étant récupérées dans un réservoir adéquat non représenté. Une électrovanne 8 est prévu sur le circuit de liquide caloporteur afin d'isoler l'aérotherme pour canaliser la chaleur produite par la chaudière diesel 1a ou le groupe motopropulseur 12 vers le ballon d'eau chaude sanitaire 1e lorsque la cellule de l'autocaravane ne nécessite pas de chauffage.

Cette coupure de chauffage peut être déclenchée manuellement ou automatiquement par les moyens de gestion 3a lorsque le thermostat d'ambiance atteint son seuil de réglage ou lorsque un délestage électrique devient nécessaire pour préserver les fonctions prioritaires.

L'autocaravane comprend de façon classique un groupe motopropulseur 12 alimenté par un carburant (diesel) stocké dans un réservoir 13, et pourvu d'un alternateur 5 produisant de l'électricité stockée dans une batterie 4.

Le dispositif échangeur de chaleur relié à la chaudière 1a comprend des moyens d'acheminement d'un fluide caloporteur réchauffé 10b vers le ballon d'eau chaude 1e et l'aérotherme 1f, et des moyens d'acheminement du fluide caloporteur refroidi 10a provenant du ballon d'eau chaude

Un clapet 12a d'isolement du groupe motopropulseur a pour fonction de permettre le transfert du liquide caloporteur lorsque le groupe motopropulseur 12 est en route, vers les différents moyens consommateurs de chaleur.

Par contre, lorsque le groupe motopropulseur 12 est a l'arrêt, ledit clapet 12a permet d'isoler ce dernier afin d'y éviter la déperdition de la chaleur produite par la chaudière diesel 1a.

Le système comprend des premiers moyens d'alimentation 2 en énergie de la chaudière 1a, du four 1b, de la plaque de cuisson 1c et du réfrigérateur 1d, ces premiers moyens d'alimentation 2 en énergie incluant facultativement une pompe 2a permettant d'acheminer le carburant contenu dans le réservoir 13 vers ces équipements domestiques 1a, 1b, 1c, 1d. On notera que dans d'autres modes de réalisation que celui représenté à la figure unique, on pourra aussi prévoir de stocker le carburant dans un réservoir annexe au réservoir principal de carburant de l'autocaravane et de n'alimenter avec ce carburant que l'un ou l'autre des autres équipements que la chaudière.

Le système comprend des moyens d'alimentation 3 en électricité et des moyens de gestion 3a de ces moyens d'alimentation 3.

Les moyens 3 desservent le four 1b, la plaque de cuisson 1c, le réfrigérateur 1d, la chaudière 1a, le ballon d'eau chaude 1e, l'aérotherme et le ventilateur 1f, et la pompe à eau 1g.

Ces seconds moyens d'alimentation électrique sont reliés à des batteries embarquées dans l'autocaravane, constitués par la batterie propre de l'autocaravane 4 et par une batterie auxiliaire 4a et, selon l'invention à des panneaux solaires photovoltaïque 6a et à une éolienne 6b permettant de produire de l'électricité.

Toujours conformément à la présente invention, le système comprend également des moyens 7 de connexion au secteur 220 V, reliés aux seconds moyens d'alimentation électrique par le biais d'un transformateur redresseur 7a permettant de transformer le courant 220 V en courant 12 V, mais pouvant aussi être reliés directement au four 1b, à la plaque de cuisson 1c, au réfrigérateur 1d, ainsi qu'au ballon d'eau chaude 1e.

Le mode de réalisation de l'invention ici-décrit n'a pas pour objet de réduire la portée de celle-ci. En conséquence, il pourra y être apporté de nombreuses modifications sans sortir de son cadre.

## Revendications

1. Système d'alimentation en énergie d'équipements domestiques de l'habitacle d'une autocaravane, lesdits équipements incluant une chaudière (1a) et des moyens de cuisson (1b,1c) **caractérisé en ce qu'**il comprend :
- des premiers moyens d'alimentation (2) en énergie d'au moins une partie desdits équipement y inclus ladite chaudière (1a) et lesdits moyens de cuisson (1b,1c) ;
- des seconds moyens d'alimentation (3) en énergie d'au moins une partie desdits équipements, y inclus ladite chaudière (1a) et lesdits moyens de cuisson (1b, 1c), et,
- des moyens de gestion (3a) desdits seconds moyens d'alimentation,
lesdits premiers moyens d'alimentation (2) utilisant comme source d'énergie un carburant liquide de la même nature que celui utilisé pour la propulsion de ladite autocaravane selon le cycle "Diesel", et
lesdits seconds moyens d'alimentation (3) utilisant l'électricité comme source d'énergie, ladite électricité étant stockée dans au moins une batterie (4,4a) embarquée sur ladite autocaravane et produite par l'alternateur (5) de ladite autocaravane et par des moyens annexes de production d'électricité (6a, 6b) également embarqués sur ladite autocaravane,
le système incluant de plus des moyens de connexion (7) au secteur permettant de recharger ladite batterie et/ou d'alimenter directement au moins certains desdits équipements.

2. Système selon la revendication 1 **caractérisé en ce que** lesdits moyens annexes de production d'électricité incluent au moins un panneau solaire (6a).

3. Système selon l'une quelconque des revendication 1 ou 2 **caractérisé en ce que** lesdits moyens annexes de production d'électricité incluent au moins une éolienne (6b).

4. Système selon l'une quelconque des revendications 1 à 3 **caractérisé en ce que** ladite au moins une batterie embarquée inclut la batterie de ladite autocaravane (4) et au moins une batterie auxiliaire (4a).

5. Système selon l'une des revendications 1 à 4 **caractérisée en ce que** lesdits moyens de gestion (3a) sont à commande manuelle.

6. Système selon l'une des revendications 1 à 4 **caractérisée en ce que** lesdits moyens de gestion (3a) sont automatisés.

7. Système selon l'une quelconque des revendications 1 à 6 **caractérisé en ce que** lesdits équipements domestiques de l'habitacle de ladite autocaravane comprennent, outre ladite chaudière (1a) et lesdits moyens de cuission (1b, 1c), au moins certains des équipements suivants :
- un réfrigérateur (1d) ;
- une ballon d'eau chaude sanitaire (1e);
- un aérotherme (1f) ;
- une pompe à eau (1g).

8. Système selon la revendication 7 **caractérisé en ce qu'**outre la chaudière et lesdits moyens de cuisson (1b, 1c), ledit réfrigérateur (1d) est desservis par lesdits premiers moyens d'alimentation (2) et par lesdits second moyens d'alimentation (3) en énergie.

9. Système selon l'une des revendications 1 à 8 **caractérisé en ce qu'**il inclut un réservoir annexe de stockage dudit carburant.

10. Autocaravane avec habitacle à l'intérieur duquel sont installés des équipements domestiques, **caractérisée en ce qu'**elle est pourvue d'un Système d'alimentation en énergie d'équipements domestiques de l'habitacle d'une autocaravane, lesdits équipements incluant une chaudière (1a) et des moyens de cuisson (1b, 1c) **caractérisé en ce qu'**il comprend :
- des premiers moyens d'alimentation (2) en énergie d'au moins une partie desdits équipement y inclus ladite chaudière (1a) et lesdits moyens de cuisson (1b,1c) ;
- des seconds moyens d'alimentation (3) en énergie d'au moins une partie desdits équipements, y inclus ladite chaudière (1a) et lesdits moyens de cuisson (1b, 1c), et,
- des moyens de gestion (3a) desdits seconds moyens d'alimentation,
lesdits premiers moyens d'alimentation (2) utilisant comme source d'énergie un carburant liquide de la même nature que celui utilisé pour la propulsion de ladite autocaravane et,
lesdits seconds moyens d'alimentation (3) utilisant l'électricité comme source d'énergie, ladite électricité étant stockée dans au moins une batterie (4,4a) embarquée sur ladite autocaravane et produite par l'alternateur (5) de ladite autocaravane et par des moyens annexes de production d'électricité (6a, 6b) également embarqués sur ladite autocaravane,
le système incluant de plus des moyens de connexion (7) au secteur permettant de recharger ladite batterie et/ou d'alimenter directement au moins certains desdits équipements.
